# EUROPEAN PATENT APPLICATION

(11) **EP 1 689 097 A1**
(43) Date of publication of application: **09.08.2006**
(21) Application number: 05002274.8
(22) Date of filing: 03.02.2005
(51) Int. Cl.: H04B 7/08

(54) **Diversity receiving system**

(71) Applicant: Afa Technologies, Inc., Hsin-Tien City, Taipei Hsien (TW)
(72) Inventor: Hsu, Chen-Chu, Dongshi Town, Tai-Chung Hsien, Taiwan (TW); Tsai, Tzung-Wei, Kao-Hsiung City, Taiwan (TW)
(74) Representative: Weber, Joachim

(57) **Abstract**

A combining unit (200,310,320,400,500,600,710,720) of a diversity receiving system (300,700) that utilizes two-way transmission between adjacent combining units (200,310,320,400,500,600,710,720) is introduced. The combining unit (200,310,320,400,500,600,710,720) includes a first input (202,312,322,402,502,602,712,722), a first output (203,313,323,403,503,603,713,723), a data pre-processor (201,311,321,401,501,601,711,721) for receiving and processing signals from an antenna (D31,D32,D71,D72), a second output (205,315,325,405,505,605,715,725) for outputing signals dependent on the signals output by the data pre-processor (201,311,321,401,501,601,711,721), a second input (204,314,324,404,504,604,714,724) for receiving signals dependent on the signals output by the second output (205,315,325,405,505,605,715,725) of the combining unit (200,310,320,400,500,600,710,720), and a combiner (208,318,328,408,508,608,718,728). The combiner (208,318,328,408,508,608,718,728) combines the signal dependent on the signal received by the first input (202,312,322,402,502,602,712,722) of the combining unit (200,310,320,400,500,600,710,720) and the signal dependent on the signal output by the data pre-processor (201,311,321,401,501,601,711,721).

## Description

The present invention relates to diversity receiving systems that utilize two-way transmission between adjacent receivers according to the pre-characterizing clause of claim 10.

In mobile radio communications, receiver diversity is an effective way of improving signal quality by gathering signals transmitted along different channels. In a diversity receiving system, several replicas of the same information signal transmitted over independently fading channels are supplied. These replicas are then appropriately combined to obtain a final output that typically has much better quality than the individual branch signals. Examples of diversity combining algorithms include the maximal ratio combining (MRC), which maximizes the output signal to noise ratio (SNR) and achieves the best performance among all linear combiners, equal-gain combining (EGC), which is the simplest form of a linear combiner but has generally poor performance, and selection diversity combining (SDC), which chooses the branch with the best quality as the final output and has low complexity and good performance.

In conventional diversity receiving systems, no matter what kind of diversity combining algorithm is adopted, signals from different receivers are all combined successively using one-way data transmission between adjacent receivers.

This in mind, the present invention aims at providing a diversity receiving system that adopts a two-way transmission between adjacent combining units.

This is achieved by a diversity receiving system that adopts a two-way transmission between adjacent combining units according to claim 1 and claim 10. The dependent claims pertain to corresponding further developments and improvements.

As will be seen more clearly from the detailed description following below, the claimed invention provides a combining unit and a diversity receiving system that adopts the present invention combining units. The claimed diversity receiving system utilizes two-way transmission between each two adjacent combining units, which is very different from the prior art.

In the following, the invention is further illustrated by way of example, taking reference to the accompanying drawings. Thereof:
Fig. 1 is a block diagram of the prior art diversity receiving system;
Fig. 2 is a block diagram of the first embodiment of the present invention combining unit coupled to an antenna;
Fig. 3 is a block diagram of the first embodiment of the present invention diversity receiving system;
Fig. 4 is a block diagram of the second embodiment of the present invention combining unit coupled to an antenna;
Fig. 5 is a block diagram of the third embodiment of the present invention combining unit coupled to an antenna;
Fig. 6 is a block diagram of the fourth embodiment of the present invention combining unit coupled to an antenna; and
Fig. 7 is a block diagram of the second embodiment of the present invention diversity receiving system.

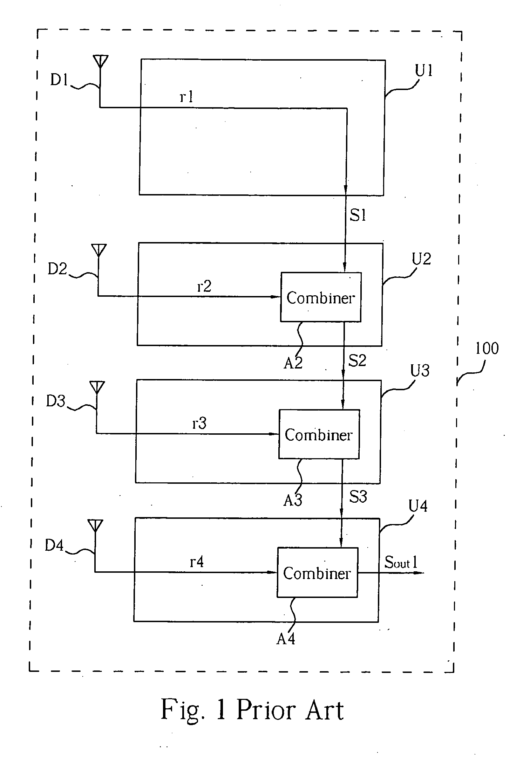

Please refer to Fig. 1. Fig. 1 is a block diagram of the prior art diversity receiving system 100. The prior art diversity receiving system 100 includes four antennas D1, D2, D3 and D4 and four combining units U1, U2, U3 and U4 for combining signals received by the four antennas by three combiners A2, A3 and A4 respectively in order to obtain a signal of best quality. As illustrated in Fig. 1, a signal S1, dependent on the signal r1 received by the antenna D1, is sent to the combiner A2 of the combining unit U2 by the combining unit U1. The combiner A2 of the combining unit U2 combines the signal S1 from the combining unit U1 and the signal r2 dependent on the signal received by the antenna D2, and generates a sum signal S2. The combining unit U2 transmits the sum signal S2 to the combining unit U3. Similarly, the combiner A3 of the combining unit U3 combines the received sum signal S2 and the signal r3 dependent on the signal received by the antenna D3, and generates a sum signal S3. In the end combining unit, the combining unit U4, the sum signal S3 from the combining unit U3 and the signal r4 dependent on the signal received by the antenna D4 are combined in order to generate a final sum signal Sout1 of the diversity receiving system 100. It is shown in Fig. 1 that each two adjacent combining units are coupled to each other in a one-way transmission. The signals r1, r2, r3 and r4 are dependent on signals received by the antennas D1, D2, D3 and D4 respectively, but not necessarily equal to the signals received by the antennas D1, D2, D3 and D4. Further, the signals r1, r2, r3 and r4 can be generated by processing the signals received by the antennas D1, D2, D3 and D4 respectively. The way that each combiner combines signals is according to the adopted diversity combining algorithm.

In the present invention, a diversity receiving system is introduced for enabling signals to be combined and transferred successively using two-way transmission between adjacent combining units.

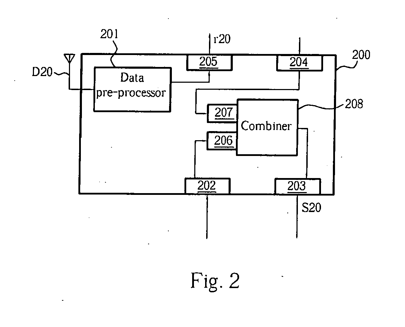

Please refer to Fig. 2. Fig. 2 is a block diagram of the first embodiment of the present invention combining unit 200 coupled to an antenna D20. The present invention combining unit 200 includes a data pre-processor 201, a first input 202, a first output 203, a second input 204, a second output 205 and a combiner 208. The data pre-processor 201 is coupled to the antenna D20 for receiving and processing signals from the antenna D20, and outputting the processed signals r20 through the second output 205 of the combining unit 200. The combiner 208 includes a first input 206 coupled to the first input 202 of the combining unit 200 for receiving signals from the first input 202 of the combining unit 200, and a second input 207 coupled to the second input 204 of the combining unit 200 for receiving signals from the second input 204 of the combining unit 200. The combiner 208 outputs signals S20 generated by combining the signals received by the first input 206 and the second input 207 of the combiner 208 through the first output 203 of the combining unit 200.

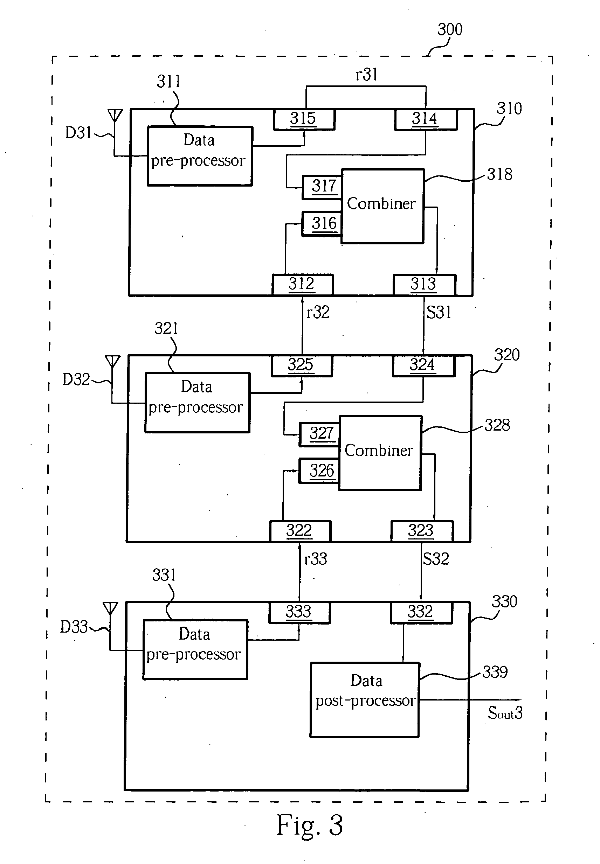

With the present invention combining unit 200, a diversity receiving system with a two-way transmission structure can be implemented. Please refer to Fig. 3. Fig. 3 is a block diagram of the first embodiment of the present invention diversity receiving system 300. The present invention diversity receiving system 300 is an example of a diversity receiving system having three combining units. As illustrated in Fig. 3, the present invention diversity receiving system 300 includes three antennas D31, D32 and D33, and three combining units 310, 320 and 330 for generating signals with higher quality by combining signals received by the three antennas D31, D32 and D33. The structures and the functions of components of the combining units 310 and 320 are the same as the structure and the functions of components of the combining unit 200, which are shown in Fig. 2. The combining unit 310 includes a data pre-processor 311, a first input 312, a first output 313, a second input 314, a second output 315 and a combiner 318. The combining unit 320 includes a data pre-processor 321, a first input 322, a first output 323, a second input 324, a second output 325 and a combiner 328. As shown in Fig. 3, the second input 314 and the second output 315 of the combining unit 310 are coupled to each other. The signals received by the antenna D31 is processed by the data pre-processor 311. The processed signal is then transmitted through the second output 315 of the combining unit 310. The second input 314 of the combining unit 310 inputs the received signals r31 to the combiner 318. The combiner 318 signals received from two inputs 316 and 317. In the other side, in the combining unit 320, the data pre-processor 321 processes the signals received by the antenna D32. The processed signal r32 is output to the first input 312 of the combining unit 310 through the second output 325 of the combining unit 320. Therefore, the combiner 318 of the combining unit 310 combines the signal from the second input 314 of the combining unit 310, that is, the signal r31 dependent on the signal received by the antenna D31, and the signal from first input 312 of the combining unit 310, that is, the signal r32 dependent on the signal received by the antenna D32. The combiner 318 outputs the combined signal S31 to the second input 324 of the combining unit 320 through the first output 313 of the combining unit 310. Similarly, in the combining unit 320, the combiner 328 combines signals from the two inputs 326 and 327, that is, the signal S31 from the combining unit 310 and the signal r33 from the combining unit 330. In a consequence, the combiner 328 outputs a sum signal S32 to the second input 332 of the combining unit 330 through the first output 323 of the combining unit 320. The combining unit 330, however, is the last combining unit in the present diversity receiving system 300 illustrated in Fig. 3. The structure of the combining unit 330 is different from the other two combining units 310 and 320. The end combining unit 330 includes a data pre-processor 331, a first input 332, a first output 333, and a data post-processor 339. The data pre-processor 331 is coupled to the antenna D33 and the first output 333 for receiving and processing signals from the antenna D33, and outputting the processed signals r33 to the first input 322 of the combining unit 320 through the first output 333 of the combining unit 330. The signal S32 received by the first input 332 of the combining unit 330 is transmitted to the data post-processor 339 for the final processing. The data post-processor 339 generates the final sum signal Sout3 and outputs the signal Sout3 of the present diversity receiving system 300.

It is easily observed that the present invention diversity receiving system 300 illustrated in Fig. 3 utilizes a two-way transmission between each pair of adjacent combining units, which is very different from the one-way transmission utilized in the conventional diversity receiving systems. The present invention diversity receiving system adopts the claimed combining units in series, with an end combining unit in the end of the series of combining units as the combining unit 330 shown in Fig. 3. With the claimed two-way transmission structure, the end combining unit does not need to include a combiner. Therefore, the hardware of the present invention can be more concise, and the operation in the adopted data post-processor in the end combining unit of the present invention can be simplified.

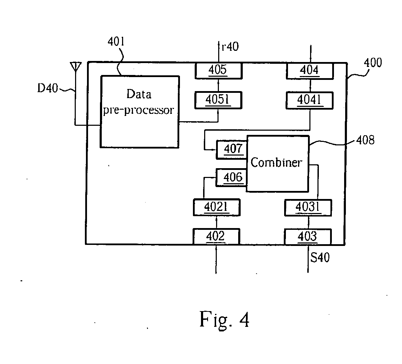

For implementing the plurality of claimed combining units on individual chips, data to be processed can be compressed before inputting to a combining unit chip or outputting from a combining unit chip for saving i/o pins and increasing the transmission bandwidth. Please refer to Fig. 4. Fig. 4 is a block diagram of the second embodiment of the present invention combining unit 400 coupled to an antenna D40. The present invention combining unit 400 includes a data pre-processor 401, a first input 402, a first output 403, a second input 404, a second output 405 and a combiner 408. The present invention combining unit 400 further includes an egress data converter 4031 coupled to the first output 403 of the combining unit 400 and the combiner 408, and an egress data converter 4051 coupled to the second output 405 of the combining unit 400 and the data pre-processor 401. The two egress data converters 4031 and 4051 are utilized to convert received signals, that is, the signal from the combiner 408 and the signal from the data pre-processor 401 respectively, into a second format. For the purpose of saving occupied i/o pins, the egress data converters need to compress signals into a format such that output signals r40 and S40 are of smaller sizes in digits. Consequently, the combining unit 400 has to include ingress data converters for expanding the received compressed signals. An ingress data converter 4021 coupled to the first input 402 of the combining unit 400 and a first input 406 of the combiner 408, and an ingress data converter 4041 coupled to the second input 404 of the combining unit 400 and the second input 407 of the combiner 408 are utilized to convert received signals, that is, signals received by the first input 402 of the combining unit 400 and the second input 404 of the combining unit 400 respectively, into a first format. For connecting the present invention combining unit 400 to other combining units in order to implement a diversity receiving system, the ingress data converters 4021 and 4041 have to convert signals in the second format to the first format, that is, to expand compressed signals. After the decoding/converting done by the two ingress data converters 4021 and 4041, signals input to the inputs 406 and 407 of the combiner 408 are in the first format. Hence the combiner 408 needs to be capable of combining signals in the first format. With the aid of the two pairs of egress data converter and ingress data converter, the required number of i/o pins on each individual combing unit chip can be reduced.

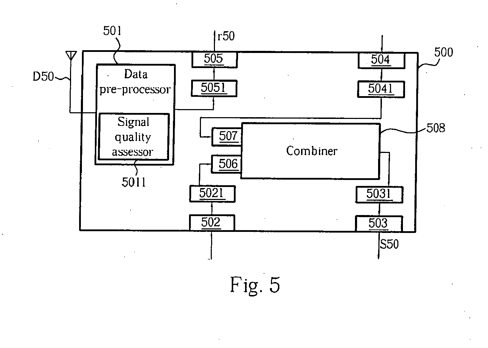

Please refer to Fig. 5. Fig. 5 is a block diagram of the third embodiment of the present invention combining unit 500 coupled to an antenna D50. The data pre-processor 501 of the claimed combining unit 500 includes a signal quality assessor 5011. The signal quality assessor 5011 is utilized to determine the quality of the received signals of the data pre-processor 501 and generate a signal quality indicator representing the quality of the received signals of the data pre-processor 501. The signal quality assessor 5011 may generate the signal quality indicator according to some characteristic of the received signals, e.g. a gain of a gain controller of the data pre-processor 501, or an estimated. signal to noise ratio (SNR) of the received signals. Therefore, the combiner 508 of the combining unit 500 may combine received signals according to the corresponding signal quality indicators. Hence many different diversity combining algorithms, such as the maximum ratio combining (MRC), the equal-gain combining (EGC), and the selection diversity combining (SDC) can be achieved in the present invention.

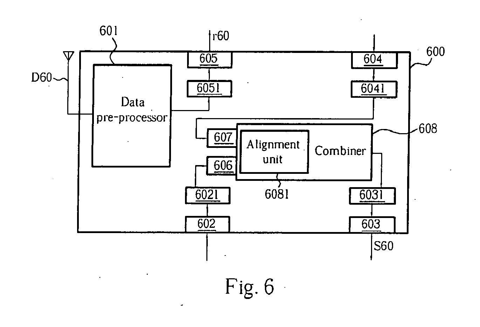

Please refer to Fig. 6. Fig. 6 is a block diagram of the fourth embodiment of the present invention combining unit 600 coupled to an antenna D60. The combiner 608 of the claimed combining unit 600 includes an alignment unit 6081 for aligning signals received by the first and second inputs 606 and 607 of the combiner 608. The combiner 608 then combines the aligned signals generated by the alignment unit 6081 of the combiner 608.

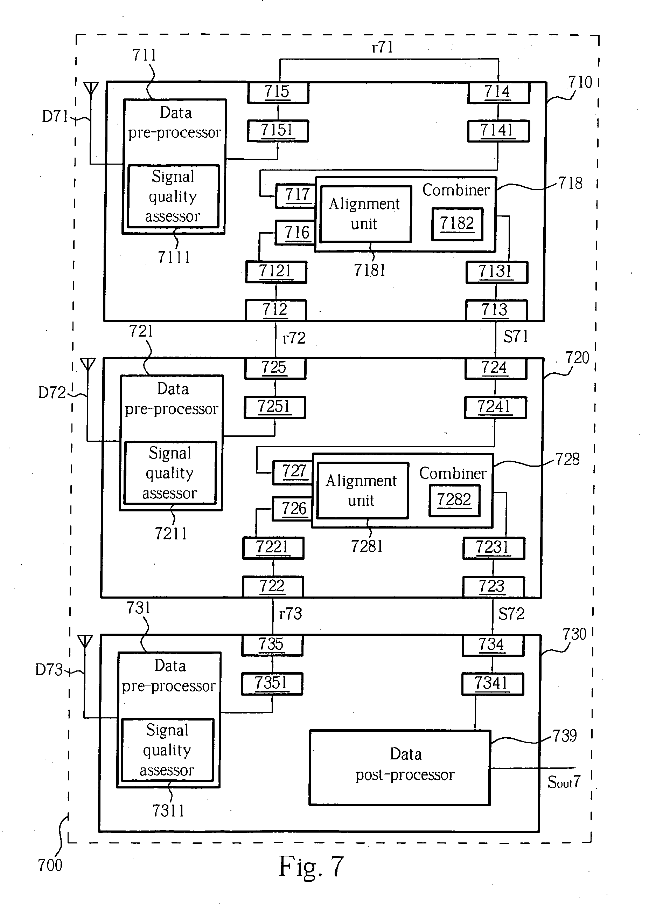

Please refer to Fig. 7. Fig. 7 is a block diagram of the second embodiment of the present invention diversity receiving system 700. The present invention diversity receiving system 700 adopts three present invention combining units 710, 720 and 730. The structure of the second embodiment of the present invention diversity receiving system 700 is quite similar to the structure of the first embodiment of the present invention diversity receiving system 300 shown in Fig. 3. As illustrated in Fig. 7, the present invention diversity receiving system 700 includes three antennas D71, D72 and D73, and three combining units 710, 720 and 730 for processing and combining signals received by the three antennas. The ingress data converters 7141, 7121, 7241, 7221 and 7341 convert signals received from the inputs 714, 712, 724, 722 and 734 into a first format respectively for better processing. The egress data converters 7151, 7131, 7251, 7231 and 7351 convert signals to be output through the outputs 715, 713, 725, 723 and 735 into a second format respectively for saving the number of occupied i/o pins. Therefore, the second format is usually a compression format. Each of the signal quality assessors 7111, 7211 and 7311 determines the quality of the received signal, and generates a signal quality indicator accordingly. Alignment units 7181 and 7281 perform alignment on received signals in the combiners 718 and 728 respectively. When converted signals (in the first format, usually a decompression format) are sent into a combiner, the alignment unit of the combiner aligns the received signals in advance. The combiner combines the aligned signals and generates an output signal. As shown in Fig. 7, the combining units 720 and 730 output the processed and converted signal r72 and r73 to the combining units 710 and 720 respectively. The combining unit 710 outputs the processed and converted signal r71 by the second output 715 of the combining unit 710 and receives the signal r71 by the second input 714 of the combining unit 710. The combiners 718 and 728 combine signals received from their two inputs respectively, and output the generated signals to the egress data converters 7131 and 7231 respectively. The outputs 713 and 723 then output the converted sum signals S71 and S72 to the combining units 720 and 730 respectively. In the end combining unit 730, the data post-processor processes the received signal S72 and generates a final sum signal Sout7 of the diversity receiving system 700. Further, each of the combiner 718 and 728 has a signal quality combiner, 7182 and 7282 respectively, for generating a signal quality indicator for the combined signal output to the egress data converter 7131 and 7231 respectively. Each combiner has two sources of signal quality indicator corresponding to the signals received by the two inputs. The signal quality combiners 7182 and 7282 generate a signal quality indicator corresponding to combined data by performing some operations on the signal quality indicators corresponding to the two received signals. For example, in the combining unit 710, the signal quality indicators of the signals received by the inputs 717 and 716 of the combiner 718, wherein the signal quality indicators are generated by the signal quality assessors 7111 and 7211 respectively, are combined by the signal quality combiner 7182 in order to produce a signal quality indicator for the signal generated by the combiner 718. Similarly, in the combining unit 720, the signal quality indicators of the signals received by the inputs 727 and 726 of the combiner 728, wherein the signal quality indicators are generated by the signal quality combiner 7182 and the signal quality assessor 7311 respectively, are combined by the signal quality combiner 7282 of the combiner 728 in order to produce a signal quality indicator for the signal generated by the combiner 728. Therefore, MRC, SDC, and EGC can be performed in each combiner in the claimed invention diversity receiving system.

In summary, the present invention discloses a diversity receiving system and an adopted combining unit. In the diversity receiving system of this invention, two-way transmission is utilized between adjacent combining units. It is also provided in the present invention ingress data converters and egress data converters for compressing data to be output in order to increase the transmission bandwidth and reduce the required number of occupied i/o pins. A signal quality indicator is adopted to indicate signal quality, such that different diversity combining algorithms can be jointly implemented in the present invention.

## Claims

1. A combining unit (200, 310, 320, 400, 500, 600, 710, 720) of a diversity receiving system (300, 700) comprising:
a first input (202, 312, 322, 402, 502, 602, 712, 722) ;
a first output (203, 313, 323, 403, 503, 603, 713, 723); and
a data pre-processor (201, 311, 321, 401, 501, 601, 711, 721) coupled to an antenna (D20, D31, D32, D40, D50, D60, D71, D72) for receiving signals from the antenna (D20, D31, D32, D40, D50, D60, D71, D72), processing the signals received from the antenna (D20, D31, D32, D40, D50, D60, D71, D72), and outputting the processed signals;
**characterized in that** the combining unit (200, 310, 320, 400, 500, 600, 710, 720) further comprises:
a second output (205, 315, 325, 405, 505, 605, 715, 725) coupled to the data pre-processor (201, 311, 321, 401, 501, 601, 711, 721) of the combining unit (200, 310, 320, 400, 500, 600, 710, 720) for outputting signals dependent on the signals output by the data pre-processor (201, 311, 321, 401, 501, 601, 711, 721) of the combining unit (200, 310, 320, 400, 500, 600, 710, 720);
a second input (204, 314, 324, 404, 504, 604, 714, 724) for receiving signals dependent on the signals output by the second output (205, 315, 325, 405, 505, 605, 715, 725) of the combining unit (200, 310, 320, 400, 500, 600, 710, 720); and
a combiner (208, 318, 328, 408, 508, 608, 718, 728) comprising:
a first input (206, 316, 326, 406, 506, 606, 716, 726) coupled to the first input (202, 312, 322, 402, 502, 602, 712, 722) of the combining unit (200, 310, 320, 400, 500, 600, 710, 720) for receiving signals dependent on signals received by the first input (202, 312, 322, 402, 502, 602, 712, 722) of the combining unit (200, 310, 320, 400, 500, 600, 710, 720);
a second input (207, 317, 327, 407, 507, 607, 717, 727) coupled to the second input (204, 314, 324, 404, 504, 604, 714, 724) of the combining unit (200, 310, 320, 400, 500, 600, 710, 720) for receiving signals dependent on the signals output by the data pre-processor (201, 311, 321, 401, 501, 601, 711, 721); and
an output coupled to the first output (203, 313, 323, 403, 503, 603, 713, 723) of the combining unit (200, 310, 320, 400, 500, 600, 710, 720) for outputting signals generated according to signals dependent on the signals received by the first input (206, 316, 326, 406, 506, 606, 716, 726) of the combiner (200, 310, 320, 400, 500, 600, 710, 720) and the second input (207, 317, 327, 407, 507, 607, 717, 727) of the combiner (208, 318, 328, 408, 508, 608, 718, 728) to the first output (203, 313, 323, 403, 503, 603, 713, 723) of the combining unit (200, 310, 320, 400, 500, 600, 710, 720).

2. The combining unit (500, 710, 720) of claim 1
**characterized in that** the data pre-processor (501, 711, 721) comprises a signal quality assessor (5011, 7111, 7211) for generating a signal quality indicator representing the quality of the received signals.

3. The combining unit (500, 710, 720) of claim 2
**characterized in that** the data pre-processor (501, 711, 721) further comprises a gain controller, wherein the signal quality assessor (5011, 7111, 7211) of the data pre-processor (501, 711, 721) generates the signal quality indicator according to a gain of the gain controller.

4. The combining unit (500, 710, 720) of claim 2
**characterized in that** the data pre-processor (501, 711, 721) further comprises a signal to noise ratio (SNR) estimator, wherein the signal quality assessor (5011, 7111, 7211) of the data pre-processor (501, 711, 721) generates the signal quality indicator according to the SNR estimator.

5. The combining unit (710, 720) of claim 2 **characterized**
**in that** the combiner (718, 728) further comprises a signal quality combiner (7182, 7282) for producing a signal quality indicator of the output signals generated by the combiner (718, 728) according to signals dependent on the signals received by the first input (716, 726) and second input (717, 727) of the combiner (718, 728) to the first output (713, 723) of the combining unit (710, 720).

6. The combining unit (500, 710, 720) of claim 2
**characterized in that** the combiner (508, 718, 728) generates the signals further according to the signal quality indicators of the signals received by the first input (506, 716, 726) and the second input (507, 717, 727) of the combiner (508, 718, 728).

7. The combining unit (600, 710, 720) of claim 1
**characterized in that** the combiner (608, 718, 728) of the combining unit (600, 710, 720) further comprises an alignment unit (6081, 7181, 7281) for aligning the signals received by the first input (606, 716, 726) and the second input (607, 717, 727) of the combiner (608, 718, 728), and the combiner (608, 718, 728) of the combining unit (600, 710, 720) outputs signals according to the aligned signals generated by the alignment unit (6081, 7181, 7281).

8. The combining unit (400, 500, 600, 710, 720) of claim 1
**characterized in that** the combining unit (400, 500, 600, 710, 720) further comprises:
a first ingress data converter (4021, 5021, 6021, 7121, 7221) coupled to the first input (402, 502, 602, 712, 722) of the combining unit (400, 500, 600, 710, 720) and the first input (406, 506, 606, 716, 726) of the combiner (408, 508, 608, 718, 728) for converting signals received by the first input (402, 502, 602, 712, 722) of the combining unit (400, 500, 600, 710, 720) into a first format and outputting the converted signals in the first format to the first input (406, 506, 606, 716, 726) of the combiner (408, 508, 608, 718, 728);
a first egress data converter (4031, 5031, 6031, 7131, 7231) coupled to the first output (403, 503, 603, 713, 723) of the combining unit (400, 500, 600, 710, 720) and the output of the combiner (408, 508, 608, 718, 728) for converting signals generated by the combiner (408, 508, 608, 718, 728) into a second format and outputting the converted signals in the second format to the first output (403, 503, 603, 713, 723) of the combining unit (400, 500, 600, 710, 720);
a second ingress data converter (4041, 5041, 6041, 7141, 7241) coupled to the second input (404, 504, 604, 714, 724) of the combining unit (400, 500, 600, 710, 720) and the second input (407, 507, 607, 717, 727) of the combiner (408, 508, 608, 718, 728) for converting signals received by the second input (404, 504, 604, 714, 724) of the combining unit (400, 500, 600, 710, 720) into a first format and outputting the converted signals in the first format to the second input (407, 507, 607, 717, 727) of the combiner (408, 508, 608, 718, 728); and
a second egress data converter (4051, 5051, 6051, 7151, 7251) coupled to the second output (405, 505, 605, 715, 725) of the combining unit (400, 500, 600, 710, 720) and the data pre-processor (401, 501, 601, 711, 721) of the combining unit (400, 500, 600, 710, 720) for converting signals output by the data pre-processor (401, 501, 601, 711, 721) of the combining unit (400, 500, 600, 710, 720) into a second format and outputting the converted signals in the second format to the second output (405, 505, 605, 715, 725) of the combining unit (400, 500, 600, 710, 720).

9. The combining unit (310, 710) of claim 1 **characterized**
**in that** the second output (315, 715) of the combining unit (310, 710) is coupled to the second input (314, 714) of the combining unit (310, 710).

10. A diversity receiving system (300, 700) comprising:
a plurality of antennas (D31, D32, D33, D71, D72, D73);
**characterized in that** the diversity receiving system (300, 700) further comprises:
an intermediate combining unit (310, 320, 710, 720) comprising:
a first input (312, 322, 712, 722);
a first output (313, 323, 713, 723);
a data pre-processor (311, 321, 711, 721) coupled to one of the plurality of antennas (D31, D32, D71, D72) for receiving signals from the antenna (D31, D32, D71, D72), processing the signals received from the antenna (D31, D32, D71, D72), and outputting the processed signals;
a second output (315, 325, 715, 725) coupled to the data pre-processor (311, 321, 711, 721) of the intermediate combining unit (310, 320, 710, 720) for outputting signals dependent on the signals output by the data pre-processor (311, 321, 711, 721) of the intermediate combining unit (310, 320, 710, 720); and
a second input (314, 324, 714, 724) for receiving signals dependent on the signals output by the second output (315, 325, 715, 725) of the intermediate combining unit (310, 320, 710, 720); and
a combiner (318, 328, 718, 728) comprising:
a first input (316, 326, 716, 726) coupled to the first input (312, 322, 712, 722) of the intermediate combining unit (310, 320, 710, 720) for receiving signals dependent on signals received by the first input (312, 322, 712, 722) of the intermediate combining unit (310, 320, 710, 720); and
a second input (317, 327, 717, 727) for receiving signals dependent on the signals output by the second input (314, 324, 714, 724) of the intermediate combining unit (310, 320, 710, 720); and
an output coupled to the first output (313, 323, 713, 723) of the intermediate combining unit (310, 320, 710, 720) for outputting signals generated according to signals dependent on the signals received by the first input (316, 326, 716, 726) and second input (317, 327, 717, 727) of the combiner (318, 328, 718, 728) to the first output (313, 323, 713, 723) of the intermediate combining unit (310, 320, 710, 720); and
an end combining unit (330, 730) comprising:
a first input (332, 734);
a data pre-processor (331, 731) coupled to one of the plurality of antennas (D33, D73) for receiving signals from the antenna (D33, D73), processing on the signals received from the antenna (D33, D73), and outputting the processed signals;
a first output (333, 735) coupled to the data pre-processor (331, 731) for outputting signals dependent on the processed signals output from the data pre-processor (331, 731); and
a second output for outputting signals dependent on signals received by the first input (332, 734) of the end combining unit (330, 730);
wherein the first input (332, 734) and the first output (333, 735) of the end combining unit (330, 730) are coupled to a first output (323, 723) and a first input (322, 722) of an intermediate combining unit (320, 720) for receiving signals from the first output (323, 723) of the intermediate combining unit (320, 720) and outputting signals dependent on the processed signals output from the data pre-processor (331, 731) to the first input (322, 722) of an intermediate combining unit (320, 720) respectively.

11. The diversity receiving system (300, 700) of claim 10
**characterized in that** the diversity receiving system (300, 700) comprises at least one intermediate combining unit (320, 720), wherein a second input (324, 724) and a second output (325, 725) of each of the at least one intermediate combining unit (320, 720) are coupled to a first output (313, 713) and a first input (312, 712) of an intermediate combining unit (310, 710) respectively.

12. The diversity receiving system (300, 700) of claim 10
**characterized in that** the second input (314, 714) of the intermediate combining unit (310, 710) is coupled to the second output (315, 715) of the intermediate combining unit (310, 710).

13. The diversity receiving system (700) of claim 10
**characterized in that** each data pre-processor (711, 721, 731) comprises a signal quality assessor (7111, 7211, 7311) for generating a signal quality indicator representing the quality of the received signals.

14. The diversity receiving system (700) of claim 13
**characterized in that** each data pre-processor (711, 721, 731) further comprises a gain controller, wherein the signal quality assessor (7111, 7211, 7311) of the data pre-processor (711, 721, 731) generates the signal quality indicator according to a gain of the gain controller.

15. The diversity receiving system (700) of claim 13
**characterized in that** each data pre-processor (711, 721, 731) further comprises a signal to noise ratio (SNR) estimator, wherein the signal quality assessor (7111, 7211, 7311) of the data pre-processor (711, 721, 731) generates the signal quality indicator according to the SNR estimator.

16. The diversity receiving system (700) of claim 13
**characterized in that** the combiner (718, 728) of the intermediate combining unit (710, 720) further comprises a signal quality combiner (7182, 7282) for producing a signal quality indicator of the output signals generated by the combiner (718, 728) of the intermediate combining unit (710, 720) according to signals dependent on the signals received by the first input (716, 726) and the second input (717, 727) of the combiner (718, 728) to the first output (713, 723) of the intermediate combining unit (710, 720).

17. The diversity receiving system (700) of claim 13
**characterized in that** the combiner (718, 728) of the intermediate combining unit (710, 720) generates the signals further according to the signal quality indicators of the signals received by the first input (716, 726) and the second input (717, 727) of the combiner (718, 728).

18. The diversity receiving system (700) of claim 10
**characterized in that** the combiner (718, 728) of the intermediate combining unit (710, 720) further comprises an alignment unit (7181, 7281) for aligning the signals received by the first input (716, 726) and the second input (717, 727) of the combiner (718, 728) of the intermediate combining unit (710, 720), and the combiner (718, 728) of the intermediate combining unit (710, 720) outputs signals according to the aligned signals generated by the alignment unit (7181, 7281) of the combiner (718, 728) of the intermediate combining unit (710, 720).

19. The diversity receiving system (700) of claim 10
**characterized in that** the intermediate combining unit (710, 720) further comprises:
a first ingress data converter (7121, 7221) coupled to the first input (712, 722) of the intermediate combining unit (710, 720) and the first input (716, 726) of the combiner (718, 728) for converting signals received by the first input (712, 722) of the intermediate combining unit (710, 720) into a first format and outputting the converted signals in the first format to the first input (716, 726) of the combiner (718, 728); and
a first egress data converter (7131, 7231) coupled to the first output (713, 723) of the intermediate combining unit (710, 720) and the output of the combiner (718, 728) of the intermediate combining unit (710, 720) for converting signals generated by the combiner (718, 728) into a second format and outputting the converted signals in the second format to the first output (713, 723) of the intermediate combining unit (710, 720);
a second ingress data converter (7141, 7241) coupled to the second input (714, 724) of the intermediate combining unit (710, 720) and the second input (717, 727) of the combiner (718, 728) of the intermediate combining unit (710, 720) for converting signals received by the second input (714, 724) of the intermediate combining unit (710, 720) into the first format and outputting the converted signals in the first format to the second input (717, 727) of the combiner (718, 728); and
a second egress data converter (7151, 7251) coupled to the second output (715, 725) of the intermediate combining unit (710, 720) and the data pre-processor (711, 721) of the intermediate combining unit (710, 720) for converting signals output by the data pre-processor (711, 721) of the intermediate combining unit (710, 720) into a second format and outputting the converted signals in the second format to the second output (715, 725) of the intermediate combining unit (710, 720).

20. The diversity receiving system (300, 700) of claim 10
**characterized in that** the end combining unit (330, 730) further comprises:
a data post-processor (339, 739) for processing the signals received by the first input (332, 734) of the end combining unit (330, 730) and outputting the processed signals to the second output of the end combining unit (330, 730).
